# EUROPEAN PATENT SPECIFICATION

(11) **EP 3 112 249 B1**
(45) Date of publication and mention of the grant of the patent: **03.07.2019**
(21) Application number: 15755871.9
(22) Date of filing: 27.02.2015
(51) Int. Cl.: B63B 25/16, B63H 21/38, F02M 21/02

(54) **BOIL-OFF GAS TREATMENT SYSTEM**
ABDAMPFBEHANDLUNGSSYSTEM
SYSTÈME DE TRAITEMENT DE GAZ D'ÉVAPORATION

(30) Priority: 28.02.2014 KR 20140024460
(43) Date of publication of application: 04.01.2017
(73) Proprietor: Daewoo Shipbuilding & Marine Engineering Co., Ltd., Seoul 100-180 (KR)
(72) Inventor: LEE, Joon Chae, Daegu 701-765 (KR); KIM, Nam Soo, Suwon-si Gyeonggi-do 440-710 (KR); JUNG, Je Heon, Seoul 139-753 (KR); PARK, Cheong Gi, Seoul 130-861 (KR)
(74) Representative: Intès, Didier Gérard André
(86) International application number: PCT/KR2015/001916
(87) International publication number: WO 2015/130122

(56) References cited:
- EP-A1- 2 693 034
- KR-B1- 101 289 212
- KR-B1- 101 289 212
- KR-B1- 101 333 947
- KR-B1- 101 334 002
- US-A1- 2009 113 928
- US-A1- 2009 217 676

## Description

### [Technical Field]

The present invention relates to a boil-off gas treatment system, and more particularly, to a boil-off gas treatment system, which includes a compressor compressing boil-off gas generated in an LNG storage tank of a ship or a floating structure; a heat exchanger cooling the compressed boil-off gas through heat exchange with boil-off gas to be supplied to the compressor; an expansion unit performing adiabatic expansion of the boil-off gas cooled by the heat exchanger; and a gas-liquid separator performing gas/liquid separation of the boil-off gas subjected to adiabatic expansion by the expansion unit and supplying liquefied natural gas to the LNG storage tank, in which a bypass line is constituted to allow the boil-off gas subjected to adiabatic expansion to be supplied from a downstream side of the expansion unit to a downstream side of the gas-liquid separator, thereby enabling diversification of system operation.

### [Background Art]

Liquefied natural gas (LNG) is a colorless transparent liquid obtained by cooling natural gas mainly consisting of methane to about -163°C and has a volume of about 1/600 that of natural gas. Thus, natural gas is liquefied into LNG for efficient transportation and an LNG carrier is used for marine transportation of LNG.

Since liquefaction of natural gas occurs at a cryogenic temperature of about -163°C under ambient pressure, LNG is likely to be vaporized if the temperature of LNG increases slightly above -163°C under ambient pressure. Although an LNG storage tank provided to an LNG carrier, LNG-FPSO, RV, and the like is provided with a thermal insulation structure, it is impossible to completely prevent heat transfer to LNG in the LNG storage tank, and thus, LNG is continuously vaporized to generate boil-off gas (BOG) in the LNG storage tank during storage of LNG in the LNG storage tank.

BOG is a kind of LNG loss and is an important factor in transportation efficiency of LNG, and since excessive accumulation of BOG within the LNG storage tank can cause damage to the LNG storage tank through excessive increase in pressure of the LNG storage tank, various studies have been made to develop a method for treatment BOG generated in the LNG storage tank.

Recently, for treatment of BOG, a method of returning BOG to the storage tank after reliquefaction of BOG, a method of using BOG as an energy source for ships, and the like are used. In addition, a method of burning excess BOG using a gas combustion unit (GCU) is used.

The gas combustion unit inevitably burns excess BOG not used in the ship in order to regulate pressure of the storage tank and has a problem of waste of chemical energy of BOG through combustion.

When a dual fuel (DF) engine is applied to a main propulsion apparatus in a propulsion system of an LNG carrier, boil-off gas generated in the LNG storage tank may be used as fuel of the DF engine. When the amount of boil-off gas generated in the LNG storage tank exceeds the amount of fuel used in ship propulsion in the DF engine, the boil-off gas is sent to and burnt by a gas combustor in order to protect the LNG storage tank. US2009113928A1 discloses a system for liquefying boil off gas from an LNG storage. More specifically the document discloses warming the boil off gas in a heat exchanger, compressing the boil off gas and cooling the compressed boil off gas in the heat exchanger, expanding the cooled boil off gas into a separator and routing the liquid phase of the separator into the LNG tank.

### [Disclosure]

### [Technical Problem]

Since LNG is in a cryogenic state and very sensitive to environmental variation such as temperature and the like, spontaneous gasification of LNG continues to occur within a cargo hold during voyage of a ship, thereby generating a significant amount of boil-off gas (BOG). Since an excess of BOG in the storage tank can cause explosion of the storage tank through increase in internal pressure of the storage tank, BOG is discharged and re-liquefied for storage, or is removed through combustion. It is known that a ship having a heat insulation structure generates BOG in an amount of about 0.05 vol%/day in the storage tank during transportation of LNG and a conventional LNG carrier gasifies LNG into boil-off gas in an amount of 4 to 6 ton (t) per hour or about 300 ton per voyage.

For reliquefaction of boil-off gas in the storage tank, the boil-off gas is discharged from the storage tank and subjected to a cooling cycle in a reliquefaction apparatus, in which the boil-off gas is returned to the storage tank after reliquefaction through heat exchange with a refrigerant in a cryogenic state, for example, nitrogen, a mixed refrigerant, and the like. The reliquefaction apparatus based on such a cooling cycle is operated in a complex manner that results in complicated control of the overall system and large power consumption.

As such, liquefaction of a large amount of BOG requires a complicated reliquefaction apparatus and large energy consumption, and removal of fuel through combustion results in waste of fuel, and the like. Thus, there is a need for a system capable of efficiently treatment boil-off gas generated in the storage tank.

The present invention has been conceived to solve such problems in the art and is aimed at providing a system for efficiently treatment boil-off gas generated in an LNG storage tank of a ship or a floating structure.

### [Technical Solution]

In accordance with one aspect of the present invention, there is provided a boil-off gas treatment system including: a compressor compressing boil-off gas generated in an LNG storage tank of a ship or a floating structure; a heat exchanger cooling the compressed boil-off gas through heat exchange with boil-off gas to be supplied to the compressor; an expansion unit performing adiabatic expansion of the boil-off gas cooled by the heat exchanger; a gas-liquid separator performing gas/liquid separation of the boil-off gas subjected to adiabatic expansion by the expansion unit and supplying liquefied natural gas to the LNG storage tank; and a bypass line through which the boil-off gas subjected to adiabatic expansion is supplied from a downstream side of the expansion unit to a downstream side of the gas-liquid separator.

The boil-off gas treatment system may further include: a recirculation line through which the boil-off gas of a gas phase separated by the gas-liquid separator is introduced into a flow of the boil-off gas to be supplied from the LNG storage tank to the heat exchanger; and a cooler provided to the recirculation line and additionally cooling the boil-off gas cooled by the heat exchanger with the boil-off gas separated by the gas-liquid separator.

The boil-off gas treatment system may further include a first separation valve disposed upstream of the gas-liquid separator and a second separation valve provided to the bypass line.

The compressor may be a multistage compressor in which compression cylinders and intermediate coolers are alternately arranged, and the boil-off gas compressed through part of the multistage compressor may be supplied as fuel to a first engine.

The boil-off gas compressed through the entirety of the multistage compressor may be supplied as fuel to a second engine, and the boil-off gas remaining after supply to the first and second engines may be stored in the LNG storage tank after liquefaction through the heat exchanger and the expansion unit.

The first engine may be a DF engine capable of receiving the boil-off gas compressed to a pressure of 5 to 20 bar as fuel, and the second engine may be an MEGI engine capable of receiving the boil-off gas compressed to a pressure of 150 to 400 bar as fuel.

The expansion unit may include one of an expansion valve (J-T valve) and an expander.

In accordance with an example process not related to the invention, there is provided a boil-off gas treatment system including: a fuel supply line through which boil-off gas generated in an LNG storage tank of a ship or a floating structure is compressed and supplied to an engine of the ship or the floating structure; a liquefaction line through which some of the compressed boil-off gas is separated, cooled through heat exchange with boil-off gas, which is generated in the LNG storage tank to be compressed, and is liquefied through adiabatic expansion; a gas-liquid separator performing gas-liquid separation of the boil-off gas subjected to adiabatic expansion and supplying liquefied natural gas to the LNG storage tank; and a bypass line branched from the liquefaction line and allowing the boil-off gas subjected to adiabatic expansion to be supplied to the LNG storage tank after bypassing the gas-liquid separator.

The boil-off gas treatment system according to the example process not related to the invention may further include a recirculation line through which the boil-off gas of a gas phase separated by the gas-liquid separator is reintroduced into the fuel supply line; and a cooler disposed at an intersection point between the recirculation line and the liquefaction line and additionally cooling the boil-off gas cooled through heat exchange with boil-off gas to be compressed in the fuel supply line with the boil-off gas separated by the gas-liquid separator.

### [Advantageous Effects]

The system according to the present invention can supply boil-off gas generated in an LNG storage tank as engine fuel through compression of the boil-off gas while achieving reliquefaction of remaining boil-off gas using cold heat of the boil-off gas per se, and thus does not require a separate refrigerant system, thereby reducing initial installation costs and equipment size, while allowing easy maintenance and repair.

In this way, the system according to the present invention does not employ a reliquefaction apparatus which requires large energy consumption for reliquefaction, and thus can reduce operation costs for reliquefaction and the amount of natural gas wasted due to combustion for reliquefaction in a GCU and the like, thereby improving economic feasibility.

Furthermore, the system according to the present invention is provided with a bypass line configured to allow boil-off gas to bypass a gas-liquid separator such that the boil-off gas can be reintroduced into the LNG storage tank without passing through the gas-liquid separator after liquefaction of boil-off gas in a flash gas state with cold heat in the storage tank, enabling diversification of system operation.

### [Description of Drawings]

Fig. 1 is a schematic diagram of a boil-off gas treatment system not according to the present invention.
Fig. 2 is a schematic diagram of a boil-off gas treatment system not according to the present invention.
Fig. 3 is a schematic diagram of a boil-off gas treatment system not according to the present invention used together with a fuel gas supply system.
Fig. 4 is a schematic diagram of a boil-off gas treatment system according to a third exemplary embodiment of the present invention.
Fig. 5 is a schematic diagram of a boil-off gas treatment system according to a fourth exemplary embodiment of the present invention.
Fig. 6 is a schematic diagram of a boil-off gas treatment system according to a fifth exemplary embodiment of the present invention.
Fig. 7 is a schematic diagram of a boil-off gas treatment system according to a sixth exemplary embodiment of the present invention.

### [Best Mode]

The above and other aspects, advantages and objects of the present invention will become apparent from the accompanying drawings and descriptions of the following exemplary embodiments of the present invention.

Hereinafter, exemplary embodiments of the present invention and example processes not according to the invention will be described in detail with reference to the accompanying drawings. Like components will be denoted by like reference numerals through the accompanying drawings.

In general, the International Maritime Organization (IMO) regulates the emission of nitrogen oxides (NO_{X}) and sulfur oxides (SO_{X}) among exhaust gases of ships and, these days, also tries to regulate the emission of carbon dioxide (CO₂). Particularly, the issue of the regulation of nitrogen oxides (NO_{X}) and sulfur oxides (SO_{X}) was raised by the Prevention of Marine Pollution from Ships (MARPOL) protocol in 1997. After eight years, the protocol met requirements for effectuation and entered into force in May 2005, and currently, the regulation is in force as a compulsory provision.

Therefore, in order to meet such provisions, a variety of methods have been introduced to reduce the emission of nitrogen oxides (NO_{X}). As one of these methods, a high-pressure natural gas injection engine for a marine structure such as an LNG carrier, for example, an MEGI engine has been developed and used. The MEGI engine is spotlighted as an eco-friendly next-generation engine capable of reducing emission of pollutants, for example, carbon dioxide by 23%, nitrogen compounds by 80%, and sulfur compounds by 95% or more, as compared with a diesel engine outputting the same level of power.

Such an MEGI engine may be provided in a ship such as an LNG carrier which transports LNG while storing the LNG in a storage tank capable of withstanding cryogenic temperatures (as used herein, the term "ship" is a concept including offshore plants, such as an LNG FPSO, an LNG FSRU, and the like, as well as an LNG carrier, an LNG RV, and the like). In this case, the MEGI engine uses natural gas as fuel and requires a high pressure of about 150 to 400 bara (absolute pressure) for gas supply, depending upon engine load.

The MEGI engine may be directly coupled to a propeller for propulsion and, to this end, may be a two-stroke engine rotating at low speed. That is, the MEGI engine is a low-speed two-stroke high-pressure natural gas injection engine.

In addition, in order to reduce the emission of nitrogen oxides, a DF engine (for example, a dual fuel diesel generator (DFDG)) using a mixture of diesel oil and natural gas as fuel has been developed and used for propulsion or power generation. The DF engine may burn the mixture of oil and natural gas or use only one selected from the oil and the natural gas as fuel. Since less sulfur compounds are contained in natural gas than oil, sulfur oxide content of exhaust gas is reduced.

A DF engine does not require such high-pressure fuel gas as in an MEGI engine and requires fuel gas compressed to a pressure of about several to tens of bara. The DF engine obtains electrical power by driving a power generator using driving force, and drives a propulsion motor or operates a variety of apparatuses or facilities using the electrical power.

When natural gas is supplied as fuel, it is unnecessary to adjust a methane number for the MEGI engine, whereas it is necessary for the DF engine to adjust a methane number.

When LNG is heated, a methane component having a relatively low liquefaction temperature is preferentially gasified. Therefore, boil-off gas (BOG) having a high methane content may be supplied as fuel to the DF engine. However, since LNG has a lower methane content than BOG, a methane number of LNG is lower than a requisite methane number for the DF engine, and ratios of hydrocarbon components (methane, ethane, propane, butane, and the like) constituting LNG vary depending upon production sites. Thus, LNG is not suitable to supply as fuel to the DF engine after gasification.

In order to adjust the methane number, a heavy hydrocarbon (HHC) component having a higher liquefaction temperature than methane may be liquefied and removed by forcibly gasifying and cooling liquefied natural gas. After adjustment of the methane number, the methane-number-adjusted natural gas may be additionally heated depending upon a requisite temperature for an engine.

Next, exemplary embodiments of the invention will be described in detail with reference to the accompanying drawings. It should be understood that the following embodiments may be modified in various ways and do not limit the scope of the present invention.

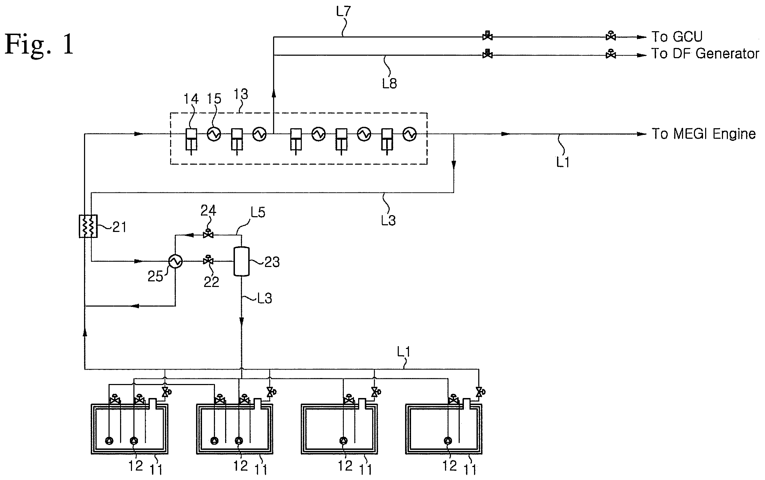

In Fig. 1, the boil-off gas treatment system. is applied to an LNG carrier provided with a high-pressure natural gas injection engine capable of using natural gas as fuel, that is, an MEGI engine. However, it should be understood that the boil-off gas treatment system may be applied not only to any kind of ships provided with a liquefied gas storage tank, such as LNG carriers, LNG RVs, and the like, but also to offshore plants such as LNG FPSOs, LNG FSRUs, and the like.

In the boil-off gas treatment system boil-off gas (NBOG) generated in and discharged from storage tanks 11 storing liquefied gas is delivered to a compressor 13 along a boil-off gas supply line L1, compressed by the compressor 13, and then supplied to a high pressure natural gas injection engine, for example, an MEGI engine. When supplied as fuel to the high pressure natural gas injection engine, for example, an MEGI engine, the boil-off gas is compressed to a high pressure of about 150 to 400 bara by the compressor 13.

Although the storage tanks are provided with sealing and heat insulation barriers in order to store liquefied gas such as LNG and the like in a cryogenic state, the storage tanks cannot achieve complete blocking of heat transfer from the outside. As a result, evaporation of liquefied gas continues within the storage tanks 11 and boil-off gas is discharged from the storage tanks 11 through the boil-off gas discharge line L1 in order to maintain the pressure of the boil-off gas at a suitable level within the storage tanks 11.

Each of the storage tanks 11 is provided therein with a discharge pump 12 for discharging LNG from the storage tank as needed.

The compressor 13 may include at least one compression cylinder 14 and at least one intermediate cooler 15 configured to cool boil-off gas, which is increased in temperature during compression. The compressor 13 may be configured to compress boil-off gas to, for example, about 301 bara. Although the compressor 13 is illustrated as including five compression cylinders 14 and five intermediate coolers 15 for multistage compression in Fig. 1, it should be understood that the number of compression cylinders and the number of intermediate coolers may be changed as needed. In addition, various modifications of the compression including a single compressor including a plurality of compression cylinders, a plurality of compressors connected to each other in series, and the like can be made.

The boil-off gas compressed by the compressor 13 is supplied to the high pressure natural gas injection engine through the boil-off gas supply line L1. Here, according to the amount of fuel to be used by the high pressure natural gas injection engine, the entirety or part of the compressed boil-off gas may be supplied to the high pressure natural gas injection engine.

In addition, assuming that the boil-off gas discharged from the storage tanks 11 and compressed by the compressor 13 (namely, the entirety of the bail-off gas discharged from the storage tank) is a first stream, the boil-off treatment system may be configured such that the first stream of the boil-off gas is divided into a second stream and a third stream, in which the second stream may be supplied as fuel to the high pressure natural gas injection engine and the third stream may be returned to the storage tank after reliquefaction.

The second stream is supplied to the high pressure natural gas injection engine through the boil-off gas supply line L1 and the third stream will be returned to the storage tanks 11 through a boil-off gas return line L3. For liquefaction of the third stream of the compressed boil-off gas, the boil-off gas return line L3 is provided with a heat exchanger 21. The heat exchanger 21 performs heat exchange of the third stream of the compressed boil-off gas with the first stream of boil-off gas discharged from the storage tanks 11 to be supplied to the compressor 13.

Since a flow rate of the first stream of the boil-off gas before compression is higher than that of the third stream, the third stream of the compressed boil-off gas can be liquefied through heat exchange with the first stream of the boil-off gas before compression. As such, in the heat exchanger 21, the boil-off gas compressed to a high pressure by the compressor 13 is liquefied through heat exchange with boil-off gas having a cryogenic temperature immediately after being discharged from the storage tanks 11.

The boil-off gas (LBOG) liquefied by the heat exchanger 21 is decompressed while passing through an expansion valve 22 and is then supplied in a gas-liquid mixed state to a gas-liquid separator 23. While passing through the expansion valve 22, the LBOG may be decompressed to approximately atmospheric pressure. The liquefied boil-off gas is divided into a gaseous component and a liquid component by the gas-liquid separator 23, in which the liquid component, that is, LNG, is delivered to the storage tanks 11 through the boil-off gas return line L3, and the gaseous component, that is, the boil-off gas, joins boil-off gas, which is discharged from the storage tanks 11 to be supplied to the compressor 13, through a boil-off gas recirculation line L5. More specifically, the boil-off gas recirculation line L5 extends from an upper end of the gas-liquid separator 23 and is connected to the boil-off gas supply line L1 at an upstream side of the heat exchanger 21.

Although the heat exchanger 21 is illustrated as being provided to the boil-off gas return line L3 for convenience of description, since heat exchange between the first stream of the boil-off gas passing through the boil-off gas supply line L1 and the third stream of the boil-off gas passing through the boil-off gas return line L3 occurs in the heat exchanger 21 in practice, the heat exchanger 21 is also provided to the boil-off gas supply line L1.

The boil-off gas recirculation line L5 may also be provided with another expansion valve 24, whereby the gaseous component discharged from the gas-liquid separator 23 can be decompressed while passing through the expansion valve 24. In addition, the boil-off gas recirculation line L5 is provided with a cooler 25, which further cools the third stream of the boil-off gas, which is supplied to the gas-liquid separator 23 after being liquefied by the heat exchanger 21, through heat exchange with the gaseous component separated by the gas-liquid separator 23 and passing through the boil-off gas recirculation line L5. That is, the cooler 25 further cools the boil-off gas in a high pressure liquid state to natural gas in a low pressure cryogenic gaseous state.

Herein, although the cooler 25 is illustrated as being provided to the boil-off gas recirculation line L5 for convenience of description, since heat exchange between the third stream of the boil-off gas passing through the boil-off gas return line L3 and the gaseous component passing through the boil-off gas recirculation line L5 occurs in the cooler 25 in practice, the cooler 25 is also provided to the boil-off gas return line L3.

On the other hand, when generation of excess BOG is expected due to BOG within the storage tanks 11 exceeding requisite fuel for the high pressure natural gas injection engine, some of the boil-off gas, which has been compressed or is in the course of being compressed stepwise in the compressor 13, is discharged through boil-off gas branch lines L7, L8 to be used by boil-off gas consumption sides. Examples of the boil-off gas consumption sides may include a GCU, a DF generator (DFDG), a gas turbine, and the like, which can employ, as fuel, lower pressure natural gas than the MEGI engine.

In the boil-off gas treatment system and method according to the first exemplary embodiment as described above, since the boil-off gas generated during transportation of a cargo (that is, LNG) of an LNG carrier may be used as engine fuel, or may be stored in the storage tank after being reliquefied and returned to the storage tank, it is possible to reduce or prevent waste of the boil-off gas by the GCU and the like and to treat the boil-off gas through reliquefaction without installation of a separate reliquefaction apparatus which uses a separate refrigerant such as nitrogen and the like.

Further, since the boil-off gas treatment system and method as described above does not require installation of the separate reliquefaction apparatus which uses a separate refrigerant (that is, a nitrogen refrigerant cooling cycle, a mixed refrigerant cooling cycle, or the like), there is no need for additional installation of equipment for supply and storage of refrigerants, thereby enabling reduction in initial installation and operation costs of the overall system.

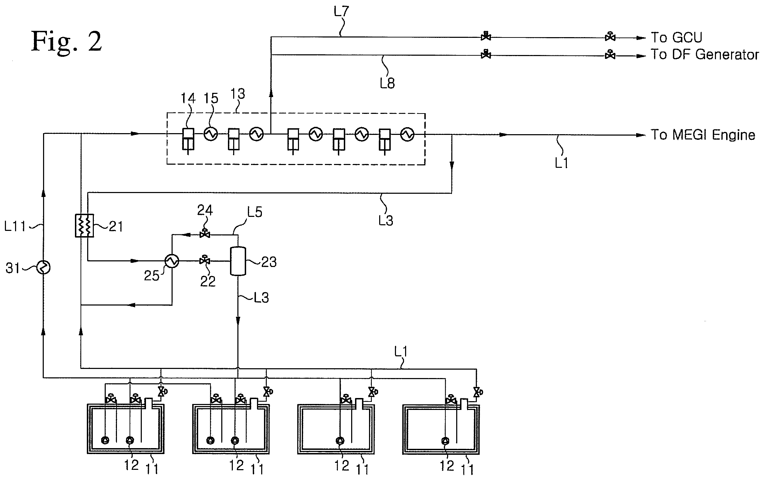

In Fig. 2 the boil-off gas treatment system allows use of LNG through forced gasification when the amount of boil-off gas required for an MEGI engine or a DF generator is higher than the amount of boil-off gas spontaneously generated in the storage tank. Hereinafter, features of the boil-off gas treatment system different from those of the first exemplary process will be described in more detail.

In the boil-off gas treatment system according to the second exemplary process boil-off gas (NBOG) generated in and discharged from the storage tanks 11 storing liquefied gas, is delivered to a compressor 13 through a boil-off gas supply line L1, compressed by the compressor 13, and supplied to a high pressure natural gas injection engine, for example, an MEGI engine, or is supplied to and used as fuel by the DF engine (DF generator) during multistage compression in the compressor 13, as in the boil-off gas treatment system according to the first exemplary process.

However, in the boil-off gas treatment system according to the second exemplary embodiment, when the amount of boil-off gas required for the high pressure natural gas injection engine and the DF generator is higher than the amount of boil-off gas spontaneously generated in the storage tanks 11, a forced gasification line L11 is established to allow LNG stored in the storage tanks 11 to be supplied to the compressor 13 after gasification of the LNG by a forcible gasifier 31.

With the forced gasification line L11 as in the second exemplary embodiment, it is possible to achieve stable fuel supply even when a small amount of boil-off gas is generated due to a small amount of LNG stored in in the storage tank or when the amount of boil-off gas required as fuel for various engines is higher than the amount of boil-off gas spontaneously generated in the storage tank.

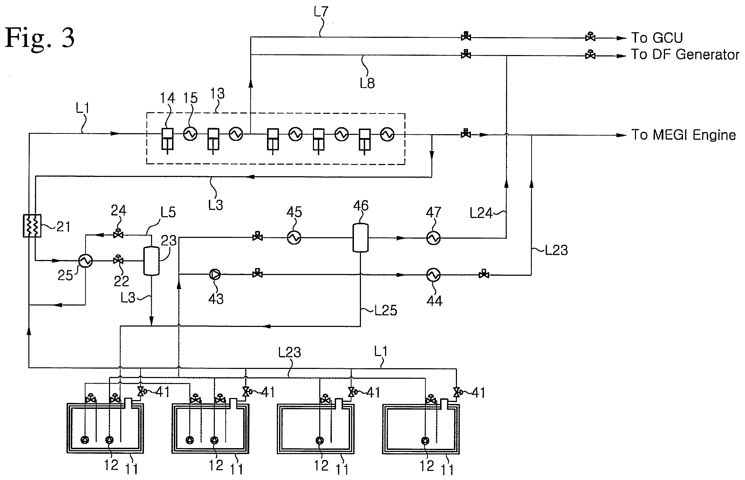

In Fig. 3, although the boil-off gas treatment system according to the first exemplary embodiment in Fig. 1 is illustrated as being coupled to the fuel gas supply system, it should be understood that the boil-off gas treatment system according to the second exemplary embodiment may also be used together with the fuel gas supply system.

Referring to Fig. 3, the fuel gas supply system for ships according to the present invention includes a high pressure natural gas injection engine, for example, an MEGI engine, as a primary engine, and a DF engine (DF generator; DFDG) as a secondary engine. Although the primary engine is generally used as a propulsion engine for navigation of a ship and the secondary engine is generally used as a power generation engine for supplying power to various devices and facilities installed within the ship, it should be understood that the present invention is not limited by the utility of the primary engine and the secondary engine. The fuel gas supply system may include a plurality of primary engines and a plurality of secondary engines.

The fuel gas supply system for ships according to the present invention is configured such that natural gas (that is, BOG in a gas state and LNG in a liquid state) stored in the storage tanks 11 can be supplied as a fuel gas to the engines (that is, the MEGI engine corresponding to the primary engine and the DF engine corresponding to the secondary engine).

In order to supply BOG in a gas state as fuel gas, the fuel gas supply system according to the present invention includes a primary BOG supply line L1 as a boil-off gas supply line through which BOG stored in the storage tanks 11 is supplied to the primary engine, and a secondary BOG supply line L8 which is branched from the primary BOG supply line L1 and supplies BOG to the secondary engine. The primary BOG supply line L1 has the same configuration as that of the boil-off gas supply line L1 shown in Figs. 1 and 2, and is referred to as the primary BOG supply line L1 for distinction from the boil-off gas supply line with respect to the DF engine (that is, the secondary BOG supply line L8) in the description made with reference to Fig. 3.

In addition, in order to supply LNG in a liquid state as fuel gas, the fuel gas supply system according to the present invention includes a primary LNG supply line L23 through which LNG stored in the storage tanks 11 is supplied to the primary engine, and a secondary LNG supply line L24 which is branched from the primary LNG supply line L23 and supplies LNG to the secondary engine.

According to the present invention, the primary BOG supply line L1 is provided with a compressor 13 for compressing BOG and the primary LNG supply line L23 is provided with a high pressure pump 43 for compressing LNG.

Boil-off gas (NBOG) generated in the storage tanks 11 storing liquefied gas and discharged through a BOG discharge valve 41 is delivered through the primary BOG supply line L1, compressed in the compressor 13, and supplied to a high pressure natural gas injection engine, for example, an MEGI engine. The boil-off gas is supplied to the high pressure natural gas injection engine after being compressed to a high pressure of about 150 to 400 bara by the compressor 13.

Although the storage tanks are provided with sealing and heat insulation barriers in order to store liquefied gas such as LNG and the like in a cryogenic state, the storage tanks cannot achieve complete blocking of heat transfer from the outside. As a result, evaporation of liquefied gas continues within the storage tanks 11 and boil-off gas is discharged from the storage tanks 11 in order to maintain pressure of the boil-off gas at a suitable level within the storage tanks 11.

The compressor 13 may include at least one compression cylinder 14 and at least one intermediate cooler 15 configured to cool boil-off gas, which has increased temperature during compression. The compressor 13 may be configured to compress boil-off gas to, for example, about 301 bara. Although the compressor 13 is illustrated as including five compression cylinders 14 and five intermediate coolers 15 for multistage compression in Fig. 1, it should be understood that the number of compression cylinders and the number of intermediate coolers may be changed as needed. In addition, various modifications of the compressor including a single compressor including a plurality of compression cylinders, a plurality of compressors connected to each other in series, and the like can be made.

The boil-off gas compressed by the compressor 13 is supplied to the high pressure natural gas injection engine through the primary BOG supply line L1. Here, according to the amount of fuel to be used by the high pressure natural gas injection engine, the entirety or part of the compressed boil-off gas may be supplied to the high pressure natural gas injection engine.

The secondary BOG supply line L8, through which fuel gas is supplied to the DF engine as the secondary engine, is branched from the primary BOG supply line L1. More specifically, the secondary BOG supply line L8 is branched from the primary BOG supply line L1 such that some of the boil-off gas can be supplied therethrough during multistage compression in the compressor 13. Fig. 1 shows that some of the BOG subjected to two-stage compression is supplied to the secondary engine through the secondary BOG supply line L8.

Since the DF engine (for example, DFDG) provided as the secondary engine requires a lower pressure than the MEGI engine, division of BOG compressed to high pressure at a rear end of the compressor 13 requires reduction in pressure of BOG before supply of BOG to the secondary engine, thereby causing inefficient operation.

As described above, since a methane component having a relatively low liquefaction temperature is preferentially gasified when LNG is heated, boil-off gas having a high methane content may be supplied as fuel to the DF engine. Therefore, there is no need for installation of a device for adjusting the methane number in the primary BOG supply line and the secondary BOG supply line.

On the other hand, when generation of excess BOG is expected due to BOG within the storage tanks 11 exceeding requisite fuel for the primary engine and the secondary engine, the boil-off gas may be returned to the storage tank through the boil-off gas treatment system according to the present invention.

When excess boil-off gas is generated in the storage tank, some of the boil-off gas, which has been compressed or is in the course of being compressed stepwise in the compressor 13, is discharged through a boil-off gas branch line L7 to be used by boil-off gas consumption sides. Examples of the boil-off gas consumption sides may include a GCU, a DF generator (DFDG), a gas turbine, and the like, which can employ, as fuel, lower pressure natural gas than the MEGI engine. The boil-off gas branch line L7 is preferably branched from the secondary BOG supply line L8, as shown in Fig. 3.

The process of treating at least some of boil-off gas, which is compressed in the compressor 13 and then supplied to the high pressure natural gas injection engine through the boil-off gas supply line L1, through the boil-off gas return line L3, that is, the process of returning at least some of the boil-off gas to the storage tanks 11 through reliquefaction, is the same as described with reference to Fig. 1 and Fig. 2, a detailed description of this process is omitted herein.

The primary LNG supply line L23 is provided with a discharge pump 12 disposed inside each of the storage tanks 11 and discharging LNG from the storage tanks 11, and a high pressure pump 43 compressing LNG, which is primarily compressed by the discharge pump 12, to a pressure required for the MEGI engine. Each of the storage tanks 11 may be provided therein with one discharge pump 12. Although a single high pressure pump 43 is shown in Fig. 3, a plurality of high pressure pumps connected in parallel to each other may be used.

As described above, the pressure of fuel gas required for the MEGI engine may be a high pressure of about 150 to about 400 bara (absolute pressure). As used herein, the term "high pressure" can be regarded as a pressure of about 150 to about 400 bara (absolute pressure), which is required for the MEGI engine.

LNG discharged from the storage tanks 11, which store liquefied gas, through the discharge pump 12 is supplied to the high pressure pump 43 through the primary LNG supply line L23. Then, the LNG is compressed to high pressure by the high pressure pump 43 and supplied to a gasifier 44 in which the LNG is gasified. The gasified LNG is supplied as fuel gas to the high pressure natural gas injection engine, for example, an MEGI engine. Since the pressure required for the MEGI engine is in a supercritical state, the LNG compressed to high pressure is in a gas-liquid mixed state. Thus, gasification of LNG compressed to high pressure by the gasifier 44 should be considered as meaning a process of increasing the temperature of LNG in a supercritical state to a temperature demanded by the MEGI engine.

The secondary LNG supply line L24 for supplying fuel gas to the DF engine provided as the secondary engine is branched from the primary LNG supply line L23. More specifically, the secondary LNG supply line L24 is branched from the primary LNG supply line L23 so as to allow some LNG to be supplied therethrough before compression by the high pressure pump 43.

The secondary LNG supply line L24 is provided with a gasifier 45, a gas-liquid separator 46, and a heater 47 to adjust a methane number and temperature of LNG supplied as fuel to values required for the DF engine.

As described above, since LNG has a relatively low methane content, a methane number of the LNG is lower than a requisite methane number for the DF engine, and ratios of hydrocarbon components (methane, ethane, propane, butane, and the like) constituting LNG vary depending upon production sites. Thus, LNG is not suitable to supply as fuel to the DF engine after gasification.

In order to adjust the methane number, LNG is heated by the gasifier 45 to be only partially gasified. The fuel gas, which is partially gasified to be in a gas (that is, natural gas)-liquid (that is, LNG) mixed state, is supplied to the gas-liquid separator 46 in which the fuel gas is separated into gas and liquid. Since a heavy hydrocarbon (HHC) component having high quantity of heat has a relatively high gasification temperature, LNG remaining in a liquid state in the partially gasified fuel gas is relatively increased in the ratio of the heavy hydrocarbon component. Since the heavy hydrocarbon (HHC) component having high quantity of heat has a relatively high gasification temperature, a liquid component, that is, the heavy hydrocarbon (HHC) component, is separated therefrom by the gas-liquid separator 46, whereby the fuel gas can have an increased methane number.

Given the ratio of the hydrocarbon component in LNG and a requisite methane number for the engine, heating temperature of the gasifier 45 may be adjusted in order to obtain a suitable methane number. The heating temperature in the gasifier 45 may be determined in the range of -80°C to -120°C. The liquid component separated from the fuel gas by the gas-liquid separator 46 is returned to the storage tanks 11 through a liquid component return line L25. The boil-off gas return line L3 of the boil-off gas treatment system and the liquid component return line L25 of the fuel gas supply system may join and then extend to the storage tanks 11.

The methane number adjusted fuel gas is supplied to the heater 47 through the secondary LNG supply line L24, and is heated to a requisite temperature for the secondary engine and supplied as fuel to the secondary engine. When the secondary engine is, for example, a DFDG, a requisite methane number for the DFDG is usually 80 or higher. For example, general LNG (typically, methane: 89.6%, nitrogen: 0.6%) has a methane number of 71.3 and a lower heating value (LHV) of 48,872.8 kJ/kg (at 1 atm in saturated vapor) before separation of heavy hydrocarbon components. When the heavy hydrocarbon components are removed by compressing the general LNG to a pressure of 7 bara and heating to a temperature of -120°C, the methane number of the LNG is increased to 95.5 and in this case, the LNG has an LHV of 49,265.6 kJ/kg.

According to this embodiment, two paths are provided to supply fuel gas to the engines (the primary engine and the secondary engine). That is, the fuel gas may be supplied to the engines after compression by the compressor 13 or the high pressure pump 43.

Particularly, since ships such as an LNG carrier, an LNG RV, and the like are used to transport LNG from production sites to consumption sites, the ships sail in a laden state in which storage tanks are fully loaded with LNG, when leaving for the consumption sites, and in a ballast state in which the storage tanks are nearly empty, when returning to the production sites after unloading the LNG. In the laden state, a large amount of LNG generates a larger amount of BOG, and in the ballast state, a small amount of LNG generates a smaller amount of BOG.

Although there is some difference in the amount of BOG depending upon storage tank capacity, external temperature, and the like, when an LNG storage tank has a capacity of about 130,000 m³ to 350,000 m³, the amount of BOG is about 3 to 4 ton/h in the laden state and about 0.3 to 0.4 ton/h in the ballast state. In addition, the requisite amounts of fuel gas for the engines may be about 1 to 4 ton/h (an average of about 1.5 ton/h) for the MEGI engine and about 0.5 ton/h for the DF engine (DFDG). In recent years, boil-off rate (BOR) has gradually decreased with enhanced thermal insulation performance of storage tanks, and thus the amount of BOG generated in the storage tanks has also decreased.

Accordingly, the fuel gas supply system according to this embodiment, which is provided with the compressor lines (i.e. L1 and L8 in Fig. 3) and the high pressure pump lines (i.e. L23 and L24 in Fig. 3), preferably supplies fuel gas to the engines through the compressor lines in a laden state in which a large amount of BOG is generated, and through the high pressure pump lines in a ballast state in which a small amount of BOG is generated.

Typically, requisite energy for compression of gas (BOG) to a pressure of 150 to 400 bara (absolute pressure) required for the MEGI engine by a compressor is considerably greater than requisite energy for compression of liquid (LNG) by a pump, and the compressor for compressing the gas is very expensive and occupies a large volume. Thus, it can be considered economical to use only the pump line without the compressor line. For example, a power of 2 MW is consumed to supply fuel to the MEGI engine by driving one set of multistage compressors, whereas merely a power of 100 kW is consumed when a high pressure pump is used. However, when fuel gas is supplied to engines only through the high pressure pump line in a laden state, a reliquefaction apparatus for re-liquefying BOG is required so as to treat BOG continuously generated in a storage tank. Considering energy consumption of the reliquefaction apparatus, it may be advantageous to supply fuel gas to the engines through the compressor line in the laden state and through the high pressure pump line in the ballast state by adopting both the compressor line and the pump line.

When BOG generated in the storage tank is less than requisite fuel for the MEGI engine as in the ballast state, it may be efficient that a multistage compressor not compress BOG to a requisite high pressure for the engine and part of the BOG is forcibly discharged from the compressor through the BOG branch line L7 during compression in multiple stages and then supplied as fuel to the DF engine. That is, when the BOG is supplied to the DF engine after passing only through first and second-stage compression cylinders of a 5-stage compressor, the remaining three compression cylinders run idle. For example, a power of 2 MW is required to compress BOG by driving the entire 5-stage compressor, whereas a power of 600 kW is required to use only the first and second-stage compression cylinders while idling the remaining three compression cylinders, and a power of 100 kW is required to supply fuel to the MEGI engine through the high pressure pump. Accordingly, when the amount of BOG is less than an amount of fuel required for the MEGI engine as in the ballast state, it is advantageous in terms of energy efficiency to consume all the BOG by the DF engine while supplying LNG as fuel through the high pressure pump.

However, if necessary, even when the amount of BOG is less than the amount of fuel required for the MEGI engine, it is possible to supply as much LNG as needed through forced gasification while supplying the BOG as fuel to the MEGI engine through the compressor. On the other hand, since a small amount of BOG is generated in the ballast state, the BOG may be collected until the storage tank reaches a predetermined pressure such that the collected BOG can be intermittently supplied as fuel to the DF engine or the MEGI engine, instead of consuming the BOG every time the BOG is generated.

In addition, a ship including facilities, which are difficult to repair or replace at sea, is required to include backup facilities (i.e. redundant design) in case of emergency. That is, it is necessary that a vessel be designed to have a main facility and an extra facility capable of performing the same function as the main facility such that the extra facility is in a standby state when the main facility normally operates, and performs the function of the main facility when the main facility breaks down. Facilities requiring redundant design may include rotary devices, for example, compressors, pumps, and the like.

As described above, a ship is doubly equipped with various facilities, not used in a normal state, to meet redundancy requirements. A fuel gas supply system using two compressor lines may have problems of much cost and space for installation of compressors and much energy consumption during use of the compressors, and a fuel gas supply system using two high pressure pump lines may have a problem of much energy consumption for treatment (i.e. reliquefaction) of BOG. In contrast, the fuel gas supply system according to the invention, having both a single compressor line and a single high pressure pump line, can allow the ship to perform normal navigation through one supply line even in the event that there is a problem with the other supply line, and can properly select an optimal fuel gas supply method depending upon the amount of generated BOG while using fewer expensive compressors, thereby achieving additional effects of reducing not only initial construction costs but also operation costs.

As shown in Fig. 3, when the boil-off gas treatment system and the fuel gas supply system are combined, BOG generated during transportation of cargo (i.e. LNG) by an LNG carrier may be used as fuel of an engine or stored again in the storage tank through reliquefaction, thereby making it possible to reduce or eliminate waste of BOG by a GCU and the like and to treat BOG through reliquefaction without a reliquefaction apparatus using a separate refrigerant such as nitrogen and the like.

According to the present invention, despite a recent trend that the amount of generated BOG is increased with increasing capacity of storage tanks and requisite fuel for an engine is decreased with improved performance of the engine, the remaining BOG after use as fuel for the engine may be re-liquefied and returned to the storage tanks thereby preventing waste of BOG.

Particularly, for the system and method for treatment boil-off gas according to the present invention, it is unnecessary to install a reliquefaction apparatus using a separate refrigerant (i.e. a nitrogen-refrigerant cooling cycle or a mixed-refrigerant cooling cycle). Therefore, there is no need for additional facilities for supplying and storing refrigerants, thereby reducing initial installation and operation costs for the entire system.

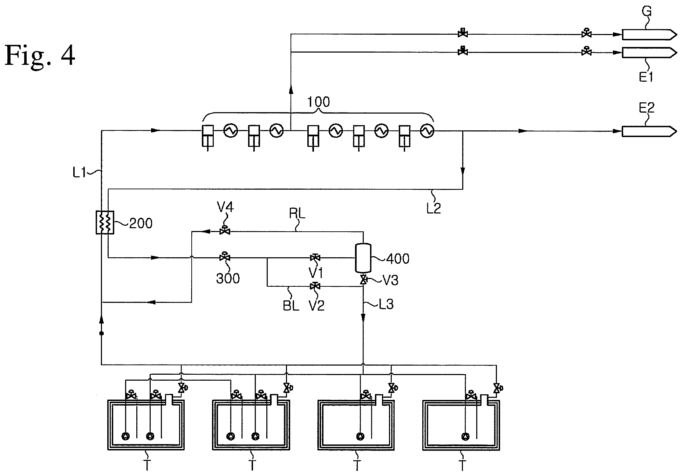

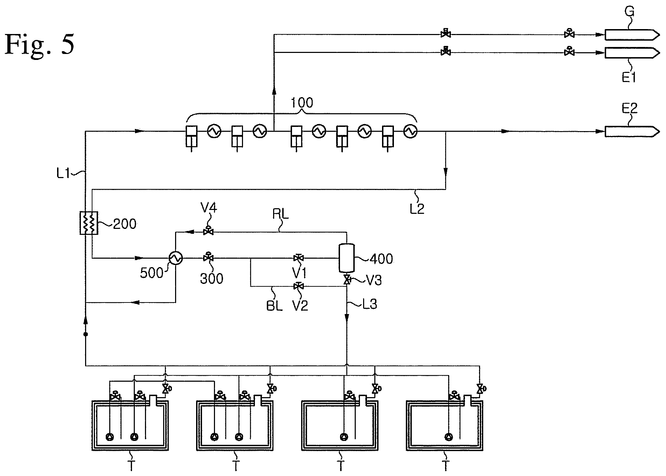

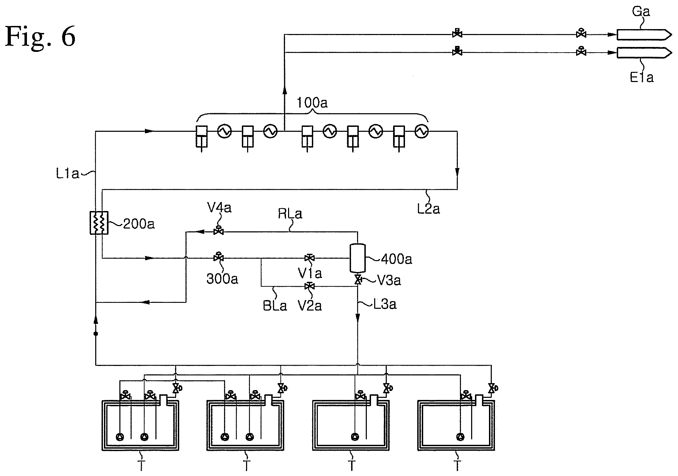

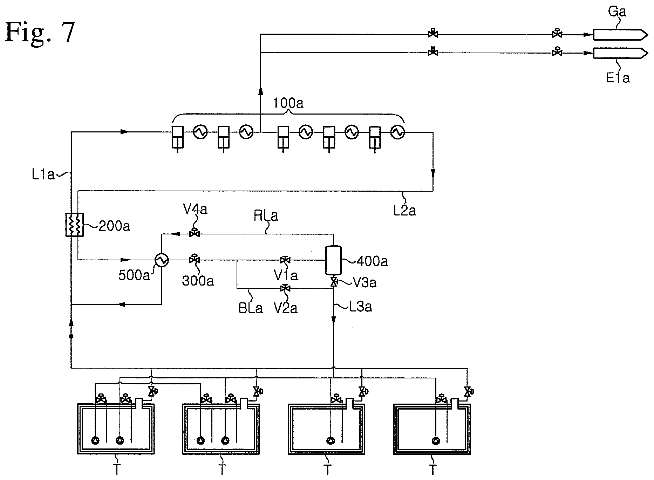

Fig. 4 is a schematic diagram of a boil-off gas treatment system according to a third exemplary embodiment of the present invention and Fig. 5 is a schematic diagram of a boil-off gas treatment system according to a fourth exemplary embodiment of the present invention. Fig. 6 is a schematic diagram of a boil-off gas treatment system according to a fifth exemplary embodiment of the present invention and Fig. 7 is a schematic diagram of a boil-off gas treatment system according to a sixth exemplary embodiment of the present invention, in which a cooler is provided to a recirculation line (RL) of the boil-off gas treatment system according to the fifth exemplary embodiment.

It should be understood that the BOG treatment systems described below may be applied not only to any kind of ships provided with a liquefied gas storage tank, such as LNG carriers, LNG RVs, and the like, but also to offshore plants such as LNG FPSOs, LNG FSRUs, and the like.

Referring to Fig. 4, the boil-off gas treatment system according to the third exemplary embodiment includes a fuel supply line L1 through which boil-off gas generated in LNG storage tanks T of a ship or a floating structure is compressed and supplied to engines of the ship or the floating structure, and a liquefaction line L2 through which some of the compressed boil-off gas is supplied, cooled through heat exchange with boil-off gas, which is generated in the LNG storage tanks T and will be subjected to compression, and is then liquefied through adiabatic expansion.

Although the LNG storage tanks T are provided with sealing and heat insulation barriers in order to store liquefied gas such as LNG and the like in a cryogenic state, the LNG storage tanks T cannot achieve complete blocking of heat transfer from the outside. As a result, evaporation of liquefied gas continues within the storage tanks and boil-off gas is discharged from the storage tanks through a boil-off gas discharge line L1 in order to maintain pressure of the boil-off gas at a suitable level within the storage tank. The discharged boil-off gas (NBOG) is delivered along a fuel supply line L1, compressed by a compressor, and then supplied to high pressure natural gas injection engines E1, E2.

In order to compress boil-off gas to be supplied to the engines, the fuel supply line L1 is provided with a compressor 100. The compressor 100 may be realized as a multistage compressor in which compression cylinders and intermediate coolers are alternately arranged. In the drawings, a multistage compressor 100 including five compression cylinders and five intermediate coolers alternately arranged is shown.

The ship or the floating structure according to this embodiment is provided with a first engine E1 that receives the compressed boil-off gas as fuel through part of the multistage compressor 100 and a second engine E2 that receives the compressed boil-off gas as fuel through the entire multistage compressor 100.

The first engine E1 may be a DF engine capable of receiving the compressed boil-off gas as fuel at 5 to 20 bar, and the second engine E2 may be an MEGI engine capable of receiving the compressed boil-off gas as fuel at 150 bar to 400 bar.

The entirety of the compressed boil-off gas may be supplied to the engines according to the amount of fuel required for the engines and the amount of boil-off gas generated in the storage tank. In the embodiments, however, since the amount of boil-off gas generated in the storage tank can be greater than the amount of fuel required for the engines, a liquefaction line L2 is provided to treat the boil-off gas such that the boil-off gas can be supplied as fuel to the first and second engines E2 and the remaining boil-off gas can be stored in the LNG storage tanks T through liquefaction by a heat exchanger 200 and an expansion unit 300.

The heat exchanger 200 is disposed at an intersection point between the liquefaction line L2 and the fuel supply line L1 to cool the boil-off gas compressed by the compressor 100 through heat exchange with boil-off gas to be supplied to the compressor 100. In the heat exchanger 200, the boil-off gas compressed to a high pressure by the compressor 100 is liquefied through heat exchange with boil-off gas having a cryogenic temperature immediately after being discharged from the LNG storage tank T. As such, according to the embodiments, boil-off gas generated in the LNG storage tanks T can be liquefied by cold heat in the LNG storage tanks without using a separate refrigerant system.

The liquefaction line L2 is provided with an expansion unit 300 which performs adiabatic expansion of the boil-off gas cooled by the heat exchanger 200, and a gas-liquid separator 400 which performs gas/liquid separation of the boil-off gas adiabatically expanded in the expansion unit 300 and supplies liquefied natural gas to the LNG storage tank T. Liquefied boil-off gas (LBOG) cooled by the heat exchanger 200 is decompressed while passing through the expansion unit 300 and is then supplied in a gas-liquid mixed state to the gas-liquid separator 400.

The expansion unit 300 may be, for example, an expansion valve (J-T valve) or an expander. While passing through the expansion unit 300, the LBOG may be decompressed to approximately atmospheric pressure.

The LBOG, which is in the gas-liquid mixed state after decompression, is divided into a gaseous component and a liquid component by the gas-liquid separator 400, in which the liquid component, that is, LNG, is delivered to the LNG storage tanks T through a return line L3 and the gaseous component, that is, boil-off gas, joins boil-off gas, which is discharged from the storage tanks 11 to be supplied to the heat exchanger 200 and the compressor 100, through the recirculation line RL. The recirculation line RL may be further provided with an expansion valve V4 capable of performing decompression of the boil-off gas separated by the gas-liquid separator 400. The return line L3 may also be provided with a separation valve V3 for opening or closing the return line.

In this embodiment, a bypass line BL may be branched from the liquefaction line L2 to allow the boil-off gas subjected to adiabatic expansion to be supplied from a downstream side of the expansion unit 300 to a downstream side of the gas-liquid separator 400, thereby enabling diversification of system operation. To this end, the liquefaction line L2 is provided with a first separation valve V1 upstream of the gas-liquid separator 400, and the bypass line BL is provided with a second separation valve V2.

With the bypass line BL, the LBOG subjected to adiabatic expansion may be separated in a two-phase state into gaseous and liquid components through the gas-liquid separator 400, or may be supplied to the LNG storage tank T through the return line L3 via the bypass line BL without passing through the gas-liquid separator 400, and then additionally liquefied by transferring heat to the storage tank.

When generation of excess BOG is expected due to BOG within the LNG storage tanks T exceeding requisite fuel for engines and reliquefaction capacity, some of the boil-off gas, which has been compressed or is in the course of being compressed stepwise in the compressor 100, is discharged to boil-off gas consumption sides G. Examples of the boil-off gas consumption sides G may include a GCU, a DF generator (DFDG), a gas turbine, and the like.

Referring to Fig. 5, the boil-off gas treatment system according to the fourth exemplary embodiment further includes a cooler 500 in the recirculation line RL of the boil-off gas treatment system according to the third exemplary embodiment to allow boil-off gas cooled by the heat exchanger 200 to be additionally cooled with boil-off gas separated by the gas-liquid separator 400 before adiabatic expansion. The boil-off gas treatment system according to this embodiment is similar to that of the aforementioned embodiment except that the cooler 500 is disposed at an intersection point between the recirculation line and the liquefaction line L2 in order to achieve additional cooling of the boil-off gas, which has passed through the heat exchanger 200 and is in a high pressure liquid state, through heat exchange with natural gas, which is separated by the gas-liquid separator 400 and is in a low pressure cryogenic gas state. Herein, a repeated description is omitted.

Referring to Fig. 6, unlike the third exemplary embodiment, the boil-off gas treatment system according to the fifth exemplary embodiment is provided only with a first engine E1a receiving boil-off gas during compression by the compressor, and is configured to allow reliquefaction of boil-off gas compressed through the entirety of the compressor 100a. This system can increase a reliquefaction amount of boil-off gas. Unlike the first and second exemplary embodiments in which plural engines receiving gas at different pressures are provided, the boil-off gas treatment system according to this embodiment is provided with the engine E1a configured to receive gas at a constant pressure, the boil-off gas compressed through the entirety of the compressor 100a is subjected to reliquefaction instead of being supplied to the engine. Herein, a repeated description is also omitted.

Referring to Fig. 7, the boil-off gas treatment system according to the sixth exemplary embodiment further includes a cooler 500a in the recirculation line RLa of the boil-off gas treatment system according to the fifth exemplary embodiment to allow boil-off gas cooled by the heat exchanger 200a to be additionally cooled with boil-off gas separated by the gas-liquid separator 400a before adiabatic expansion. Herein, a repeated description is also omitted.

It is apparent to those skilled in the art that the present invention is not limited to the above embodiments and various modifications or variations can be made without departing from the scope of the present invention.

## Claims

1. A boil-off gas treatment system comprising:
a compressor (100) compressing boil-off gas generated in an LNG storage tank (T) of a ship or a floating structure;
a heat exchanger (200) cooling the boil-off gas compressed by the compressor through heat exchange with boil-off gas to be supplied to the compressor;
an expansion unit (300) performing adiabatic expansion of the boil-off gas cooled by the heat exchanger;
a gas-liquid separator (400) performing gas/liquid separation of the boil-off gas subjected to adiabatic expansion by the expansion unit and supplying liquefied natural gas to the LNG storage tank; and
a bypass line (BL) through which the boil-off gas subjected to adiabatic expansion is supplied from a downstream side of the expansion unit to a downstream side of the gas-liquid separator.

2. The boil-off gas treatment system according to claim 1, further comprising:
a recirculation line (RL) through which the boil-off gas of a gas phase separated by the gas-liquid separator is introduced into a flow of the boil-off gas to be supplied from the LNG storage tank to the heat exchanger; and
a cooler (500) provided to the recirculation line and additionally cooling the boil-off gas cooled by the heat exchanger with the boil-off gas separated by the gas-liquid separator.

3. The boil-off gas treatment system according to claim 1, further comprising:
a first separation valve (V1) disposed upstream of the gas-liquid separator; and
a second separation valve (V2) provided to the bypass line.

4. The boil-off gas treatment system according to claim 1, wherein the compressor (100) is a multistage compressor in which compression cylinders and intermediate coolers are alternately arranged, and configured such that the boil-off gas compressed through part of the multistage compressor is supplied as fuel to a first engine (E1).

5. The boil-off gas treatment system according to claim 4, wherein boil-off gas compressed through the entirety of the multistage compressor is supplied as fuel to a second engine (E2), and the boil-off gas remaining after supply to the first and second engines is stored in the LNG storage tank after liquefaction through the heat exchanger and the expansion unit.

6. The boil-off gas treatment system according to claim 5, wherein the first engine (E1) is a DF engine capable of receiving the boil-off gas compressed to a pressure of 5 to 20 bar as fuel, and the second engine (E2) is an MEGI engine capable of receiving the boil-off gas compressed to a pressure of 150 to 400 bar as fuel.

7. The boil-off gas treatment system according to claim 1, wherein the expansion unit (300) is an expansion valve or an expander.

## Patentansprüche

1. Boil-off-Gas-Behandlungssystem, umfassend:
einen Verdichter (100), der Boil-off-Gas, das in einem LNG-Speichertank (T) eines Schiffes oder einer schwimmenden Konstruktion entsteht, verdichtet,
einen Wärmetauscher (200), der das durch den Verdichter verdichtete Boil-off-Gas durch Wärmeaustausch mit dem Verdichter zuzuführendem Boil-off-Gas kühlt,
eine Expansionseinheit (300), die adiabatische Expansion des durch den Wärmetauscher gekühlten Boil-off-Gases durchführt,
eine Gas-Flüssigkeits-Trennvorrichtung (400), die Gas-Flüssigkeits-Trennung des adiabatischer Expansion durch die Expansionseinheit unterzogenen Boil-off-Gases durchführt und dem LNG-Speichertank flüssiges Erdgas zuführt, und
eine Bypass-Leitung (BL), durch welche das adiabatischer Expansion unterzogene Boil-off-Gas von einer stromabwärtigen Seite der Expansionseinheit einer stromabwärtigen Seite der Gas-Flüssigkeits-Trennvorrichtung zugeführt wird.

2. Boil-off-Gas-Behandlungssystem nach Anspruch 1, ferner umfassend:
eine Rezirkulationsleitung (RL), durch welche das Boil-off-Gas einer durch die Gas-Flüssigkeits-Trennvorrichtung abgetrennten Gasphase in einen Strom des von dem LNG-Speichertank dem Wärmetauscher zuzuführenden Boil-off-Gases eingeleitet wird, und
einen Kühler (500), der für die Rezirkulationsleitung vorgesehen ist und das durch den Wärmetauscher gekühlte Boil-off-Gas zusätzlich mit dem Boil-off-Gas kühlt, das durch die Gas-Flüssigkeits-Trennvorrichtung abgetrennt wird.

3. Boil-off-Gas-Behandlungssystem nach Anspruch 1, ferner umfassend:
ein erstes Trennventil (V1), das stromauf der Gas-Flüssigkeits-Trennvorrichtung angeordnet ist, und
ein zweites Trennventil (V2), das für die Bypass-Leitung vorgesehen ist.

4. Boil-off-Gas-Behandlungssystem nach Anspruch 1, wobei der Verdichter (100) ein mehrstufiger Verdichter ist, in dem Verdichtungszylinder und Zwischenkühler abwechselnd angeordnet sind, und derart ausgebildet ist, dass das Boil-off-Gas, das durch einen Teil des mehrstufigen Verdichters verdichtet wird, einem ersten Motor (E1) als Kraftstoff zugeführt wird.

5. Boil-off-Gas-Behandlungssystem nach Anspruch 4, wobei Boil-off-Gas, das durch die Gesamtheit des mehrstufigen Verdichters verdichtet wird, einem zweiten Motor (E2) als Kraftstoff zugeführt wird und das Boil-off-Gas, das nach der Zufuhr zu dem ersten und dem zweiten Motor übrig bleibt, nach Verflüssigung durch den Wärmetauscher und die Expansionseinheit in dem LNG-Speichertank gespeichert wird.

6. Boil-off-Gas-Behandlungssystem nach Anspruch 5, wobei der erste Motor (E1) ein DF-Motor ist, der in der Lage ist, das auf einen Druck von 5 bis 20 bar verdichtete Boil-off-Gas als Kraftstoff entgegenzunehmen, und der zweite Motor (E2) ein MEGI-Motor ist, der in der Lage ist, das auf einen Druck von 150 bis 400 bar verdichtete Boil-off-Gas als Kraftstoff entgegenzunehmen.

7. Boil-off-Gas-Behandlungssystem nach Anspruch 1, wobei die Expansionseinheit (300) ein Expansionsventil oder ein Expander ist.

## Revendications

1. Système de traitement de gaz d'évaporation comprenant :
un compresseur (100) comprimant le gaz d'évaporation généré dans une cuve de stockage de GNL (T) d'un navire ou d'une structure flottante ;
un échangeur de chaleur (200) refroidissant le gaz d'évaporation comprimé par le compresseur par échange de chaleur avec le gaz d'évaporation devant être fourni au compresseur ;
une unité de détente (300) effectuant une détente adiabatique du gaz d'évaporation refroidi par l'échangeur de chaleur ;
un séparateur gaz-liquide (400) effectuant une séparation gaz/liquide du gaz d'évaporation soumis à la détente adiabatique par l'unité de détente et fournissant du gaz naturel liquéfié à la cuve de stockage de GNL ; et
une conduite de dérivation (BL) par l'intermédiaire de laquelle le gaz d'évaporation soumis à une détente adiabatique est délivré depuis un côté aval de l'unité de détente à un côté aval du séparateur gaz-liquide.

2. Système de traitement de gaz d'évaporation selon la revendication 1, comprenant en outre :
une conduite de recirculation (RL) par l'intermédiaire de laquelle le gaz d'évaporation d'une phase gazeuse séparée par le séparateur gaz-liquide est introduit dans un courant du gaz d'évaporation devant être délivré depuis la cuve de stockage de GNL à l'échangeur de chaleur ; et un refroidisseur (500) disposé au niveau de la conduite de recirculation et refroidissant encore le gaz d'évaporation refroidi par l'échangeur de chaleur avec le gaz d'évaporation séparé par le séparateur gaz-liquide.

3. Système de traitement de gaz d'évaporation selon la revendication 1, comprenant en outre :
une première vanne de séparation (V1) disposée en amont du séparateur gaz-liquide ; et
une deuxième vanne de séparation (V2) disposée au niveau de la conduite de dérivation.

4. Système de traitement de gaz d'évaporation selon la revendication 1, dans lequel le compresseur (100) est un compresseur à étages multiples dans lequel des cylindres de compression et des refroidisseurs intermédiaires sont agencés en alternance, et est configuré de façon que le gaz d'évaporation compressé par une partie du compresseur à étages multiples soit fourni en tant que carburant à un premier moteur (E1).

5. Système de traitement de gaz d'évaporation selon la revendication 4, dans lequel le gaz d'évaporation compressé par tout le compresseur à étages multiples est fourni en tant que carburant à un deuxième moteur (E2), et le gaz d'évaporation restant après fourniture aux premier et deuxième moteurs est stocké dans la cuve de stockage de GNL après liquéfaction par l'intermédiaire de l'échangeur de chaleur et de l'unité de détente.

6. Système de traitement de gaz d'évaporation selon la revendication 5, dans lequel le premier moteur (E1) est un moteur à bicombustible capable de recevoir le gaz d'évaporation comprimé sous une pression de 5 à 20 bar en tant que carburant, et le deuxième moteur (E2) est un moteur à injection de gaz contrôlée électroniquement capable de recevoir le gaz d'évaporation comprimé sous une pression de 150 à 400 bar en tant que carburant.

7. Système de traitement de gaz d'évaporation selon la revendication 1, dans lequel l'unité de détente (300) est une vanne de détente ou un détendeur.
